# EUROPÄISCHE PATENTSCHRIFT

(11) **EP 3 208 466 B1**
(45) Veröffentlichungstag und Bekanntmachung des Hinweises auf die Patenterteilung: **16.09.2020**
(21) Anmeldenummer: 16202246.1
(22) Anmeldetag: 05.12.2016
(51) Int. Cl.: F04D 17/16, F04D 25/16, F04D 29/02, F04D 29/42, A01F 12/44

(54) **REINIGUNGSGEBLÄSE MIT KUNSTSTOFFGEHÄUSE SOWIE VERWENDUNG EINES ROTATIONSFORMVERFAHRENS ZUR HERSTELLUNG EINES EINTEILIGEN GEHÄUSES**
CLEANING BLOWER WITH PLASTIC HOUSING AND USE OF A ROTATIONAL MOULDING METHOD TO MANUFACTURE AN INTEGRAL HOUSING
SOUFFLANTE DE NETTOYAGE AVEC CARTER EN PLASTIQUE ET UTILISATION D'UNE MÉTHODE DE MOULAGE ROTATIF POUR FABRIQUER UN CARTER INTÉGRAL

(30) Priorität: 22.02.2016 DE 102016103022
(43) Veröffentlichungstag der Anmeldung: 23.08.2017
(73) Patentinhaber: CLAAS Selbstfahrende Erntemaschinen GmbH, 33428 Harsewinkel (DE)
(72) Erfinder: Lehmberg, Andreas, 33428 Harsewinkel (DE); Fränsing, Ralf, 33428 Harsewinkel (DE)
(74) Vertreter: CLAAS Gruppe

(56) Entgegenhaltungen:
- WO-A1-2013/101971
- WO-A2-2009/064148
- DE-A1-102011 000 130
- US-A- 4 884 946

## Beschreibung

Die vorliegende Erfindung betrifft ein Reinigungsgebläse für einen Mähdrescher gemäß dem Oberbegriff des Anspruches 1 sowie die Verwendung eines Rotationsformverfahrens gemäß dem Anspruch 8.

Aus der DE 10 2011 000 130 A1 ist ein Reinigungsgebläse für einen Mähdrescher bekannt, welches koaxial nebeneinander angeordnete Lüfterräder aufweist. Jedes Lüfterrad ist von einem aus mehreren vorgeformten Stahlblechelementen hergestellten Gehäuseabschnitt ummantelt. Der Gehäuseabschnitt weist zumindest eine Eintrittsöffnung zum Ansaugen von Luft sowie zumindest ein erstes sich in tangentialer Richtung des jeweiligen Lüfterrades erstreckendes Austrittssegment auf. An diesen Gehäuseabschnitt schließt sich ein ebenfalls aus mehreren Stahlblechelementen gefertigter Kanalabschnitt an, in welchem die aus den ersten Austrittsöffnungen des Gehäuseabschnitts austretenden Luftströme zusammengeführt werden und in einer gemeinsamen Luftaustrittsöffnung münden. Die Fertigung der einzelnen Gehäuseabschnitte sowie des Kanalabschnitts aus einer Vielzahl einzelner, vorgeformter Stahlblechelemente und deren Zusammenbau sowie Verbindung miteinander ist aufgrund der Vielzahl an Fertigungsschritten relativ aufwändig. Zudem bilden sich an den Falz- Überlappungs- und Stoßstellen der Gehäuseabschnitte und des Kanalabschnittes Absätze aus, die zu Verwirbelungen im Luftströmungsprofil führen.

Aus der US 4,884,946 A ist ein Gebläse bekannt, welches ein Laufrad in einem einteiligen Gehäuse aus Kunststoff aufnimmt.

Der Erfindung liegt daher die Aufgabe zugrunde, ein Reinigungsgebläse der eingangs genannten Art derart weiterzubilden, dass dieses einfacher und kostengünstiger herstellbar ist und sich durch eine verbesserte Strömungscharakteristik auszeichnet.

Diese Aufgabe wird erfindungsgemäß durch die Merkmale des Anspruches 1 gelöst.

Vorteilhafte Weiterbildungen der Erfindung sind Gegenstand der Unteransprüche.

Gemäß dem Anspruch 1 wird ein Reinigungsgebläse für einen Mähdrescher vorgeschlagen, dass zumindest ein auf wenigstens einer Antriebswelle angeordnetes Lüfterrad, wenigstens einen das zumindest eine Lüfterrad ummantelnden Gehäuseabschnitt, welcher zumindest eine Eintrittsöffnung zum Ansaugen von Luft und zumindest ein sich in tangentialer Richtung des jeweiligen Lüfterrades erstreckendes erstes Austrittssegment aufweist, sowie einen sich an das erste Austrittssegment anschließenden Kanalabschnitt umfasst, welches dadurch gekennzeichnet ist, dass der wenigstens eine Gehäuseabschnitt und der Kanalabschnitt als ein einteiliges, aus einem Kunststoffmaterial bestehendes Gehäuse ausgeführt sind. Die Einteiligkeit des Gehäuses des Reinigungsgebläses, die durch die Verwendung eines Kunststoffmateriales erreicht wird, führt zu einer Gewichtsreduzierung gegenüber den aus mehreren Stahlblechelementen bestehenden Gebläsegehäusen sowie dem ebenfalls aus Stahlblechelementen bestehenden Kanal gemäß dem Stand der Technik. Das einteilige Gehäuse des Reinigungsgebläses ist in seinem Inneren absatzfrei. Falz- oder Stoßstellen in dem wenigstens einen Gehäuseabschnitt und in dem Kanal sowie zwischen diesen Komponenten entfallen aufgrund der Einteiligkeit des Gehäuses. Im Gegensatz zu dem Stand der Technik, bei welchem die einzelnen Gebläsegehäuse an den Kanal angeflanscht sind, wodurch sich im Bereich der Stoßstellen Absätze zwischen diesen bilden, entfallen diese bei der einteiligen Ausgestaltung des Gehäuses. Dies führt zu einem verbesserten Strömungsverhalten der Luft, da das Auftreten von Verwirbelungen beim Übergang vom Gebläsegehäuse in den Kanal wegen des Fehlens von Falz- oder Stoßstellen zwischen diesen reduziert wird.

Das Reinigungsgebläse kann mit Radialläufern oder mit Trommelläufern ausgeführt sein.

Vorteilhaft ist es, wenn das einteilige Gehäuse derart ausgeformt ist, dass es im Rotationsformverfahren herstellbar ist. Die Herstellung des einteiligen Gehäuses im Rotationsformverfahren ermöglicht eine kostengünstige Fertigung. Zudem zeichnet sich die Herstellung im Rotationsformverfahren dadurch aus, dass eine komplizierte Formgebung mit Öffnungen, durchgehenden Verbindungen, Gewinden, Einlageteilen und dergleichen mehr realisierbar ist. Es lassen sich dabei gleichmäßige Wandstärken erzielen, so dass die Stabilität des Gehäuses gewährleistet ist. Überlappungen, wie sie bei einem Zusammenfügen der einzelnen Stahlblechelemente zu einem Gebläsegehäuse oder dem Kanal gemäß dem Stand der Technik auftreten, entfallen bei der Herstellung des einteiligen Gehäuses im Rotationsformverfahren.

Es sind zumindest zwei Lüfterräder vorgesehen, die jeweils von einem Gehäuseabschnitt des einteiligen Gehäuses ummantelt sind, wobei der Kanalabschnitt aus im Wesentlichen senkrecht verlaufenden Seitenwänden sowie im Wesentlichen waagerecht verlaufenden Wänden gebildet ist, und dass im Inneren des Kanalabschnitts U-förmige Wandabschnitt angeordnet sind, deren lange Schenkel sich im Wesentlichen parallel zu den Seitenwänden erstrecken und die ersten Austrittssegmente zueinander benachbarter Gehäuseabschnitte miteinander verbinden, und wobei ein jeweiliger kurzer Schenkel der Wandabschnitte einen bogenförmigen, in Richtung einer Austrittsöffnung des Kanalabschnitts gewölbten Verlauf aufweist.

Dabei kann der jeweilige Gehäuseabschnitt einen im Wesentlichen kreiszylindrischen Querschnitt aufweisen und mit einer Ausnehmung zur Einführung des Lüfterrades versehen sein. Die jeweilige Ausnehmung kann sich in Umfangsrichtung des Gehäuseabschnittes erstrecken und durch ein flächiges Element verschließbar sein.

Weiterhin kann das erste Austrittssegment des Gehäuseabschnittes einen im Wesentlichen quaderförmigen Querschnitt aufweisen.

Vorteilhafterweise kann der jeweilige Gehäuseabschnitt eines jeden Lüfterrades ein zweites Austrittssegment aufweisen, das in Umfangsrichtung des Gehäuseabschnittes zu dem ersten Austrittssegment versetzt angeordnet ist. Das zweite Austrittssegment kann in Umfangsrichtung des Gehäuseabschnittes gesehen nahezu gegenüberliegend zu dem ersten Austrittssegment angeordnet sein.

Insbesondere kann das jeweilige erste Austrittssegment des Gehäuseabschnittes in einem gemeinsamen, sich in tangentialer Richtung des Gehäuseabschnittes erstreckenden Luftaustrittsabschnitt des Kanals münden.

Die sich zwischen den ersten Austrittssegmenten und dem Luftaustrittsabschnitt ausbildende Übergangsbereiche sind strömungstechnisch optimiert. Hierzu sind im Inneren des Kanalabschnittes senkrecht orientierte, im Wesentlichen U-förmige Wandabschnitte angeordnet. Die Bogenform des die parallelen Schenkel verbindenden Wandabschnitts kann die Umströmung bei der Aufteilung des Luftstroms auf zwei benachbarte Luftaustrittsabschnitte begünstigen.

Weiterhin wird die eingangs gestellte Aufgabe durch die Verwendung eines Rotationsformverfahrens zur Herstellung eines einteiligen, aus wenigstens einem Gehäuseabschnitt und einem Kanalabschnitt gebildeten Gehäuses eines Reinigungsgebläses nach einem der Ansprüche 1 bis 7 eines Mähdreschers gelöst.

Vorteilhafterweise kann das einteilige Gehäuse zumindest ein auf wenigstens einer Antriebswelle angeordnetes Lüfterrad, wenigstens einen das zumindest eine Lüfterrad ummantelnden Gehäuseabschnitt, welcher zumindest eine Eintrittsöffnung zum Ansaugen von Luft und zumindest ein sich in tangentialer Richtung des jeweiligen Lüfterrades erstreckendes erstes Austrittssegment umfasst, sowie den sich an die erste Austrittsöffnung anschließenden Kanalabschnitt aufweisen.

Die vorliegende Erfindung wird nachstehend anhand eines in den Zeichnungen dargestellten Ausführungsbeispieles näher erläutert.

Es zeigen:
- Fig. 1: eine schematisierte Längsschnittdarstellung eines Mähdreschers;
- Fig. 2: eine perspektivische Ansicht eines Gehäuses eines Reinigungsgebläses;
- Fig. 3: eine Frontalansicht des Gehäuses gemäß Fig. 2;
- Fig. 4: eine Ansicht von oben auf das Gehäuse gemäß Fig. 2;
- Fig. 5: eine perspektivische Ansicht eines Gehäuses mit einem als Tonnengebläse ausgeführten Reinigungsgebläse.

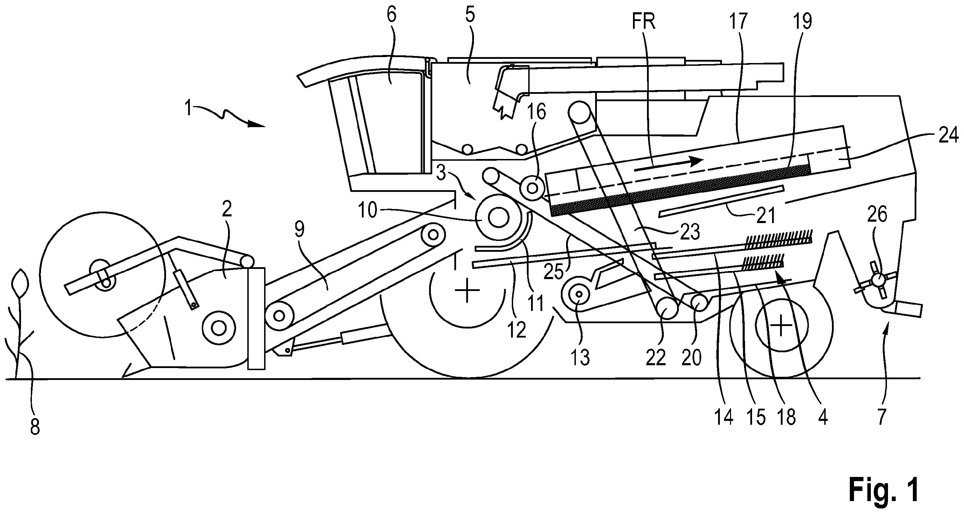

Die Darstellung in Fig. 1 zeigt eine schematische Längsschnittdarstellung eines Mähdreschers 1. Der Mähdrescher 1 trägt in seinem Frontbereich ein höhenverstellbares Schneidwerk 2, welches gewachsenes Erntegut 8 auf großer Breite aberntet, in seitlicher Richtung zusammenführt und an ein Schrägförderorgan 9 übergibt. Durch das Schrägförderorgan 9 gelangt das Erntegut 8 zu Dreschorganen 3, die in der Regel als Mehrtrommeldreschwerke ausgeführt sind. Die Dreschorgane 3 gemäß der Darstellung in der Fig. 1 umfassen eine Dreschtrommel 10, eine dieser nachgeordnete Wendetrommel 16 und einen die Dreschtrommel 10 abschnittsweise umgebenden Dreschkorb 11. Durch Öffnungen des Dreschkorbs 11 hindurch wird aus dem Erntegut 8 ein im Wesentlichen aus einem Gemisch aus Körnern, Kurzstroh und Spreu bestehender Erntegutstrom abgeschieden, der auf einen Vorbereitungsboden 12 fällt. Durch Rüttelbewegungen des oszillierend angetriebenen Vorbereitungsbodens 12 wird das Erntegut darauf nach hinten in Richtung einer Reinigungseinrichtung 4 gefördert.

Der nicht durch den Dreschkorb 11 hindurch getretene Teil des Erntegutstroms wird von der Wendetrommel 16 zu einer als Axialrotor 17 ausgeführten, sich in Längsrichtung des Mähdreschers 1 erstreckenden Abscheidevorrichtung weiterbefördert. Der Axialrotor 17 ist in seinem unteren Bereich von einem halbzylindrischen Sieb 19 umgeben, durch das ein im Wesentlichen aus einem Gemisch aus Körnern und Ährenbruchstücken bestehender Erntegutstrom abgeschieden wird, der auf einen unterhalb des Siebs 19 angeordneten Rücklaufboden 21 gelangt.

Anstelle eines einzelnen Axialrotors 17 könnten auch zwei Axialrotoren parallel nebeneinander vorgesehen sein. Alternativ kann als Abscheidevorrichtung eine Hordenschüttlervorrichtung anstelle des Axialrotors 17 zum Einsatz kommen.

Erntegut, im Wesentlichen Stroh, welches am rückwärtigen Ende 24 des Axialrotors 17 ausgeworfen wird, gelangt zu einer Verteilvorrichtung 7 am Heck des Mähdreschers 1, wo es von einem Häcksler 26 zerkleinert und schließlich auf den Boden eines Feldes ausgebracht wird.

Auf dem rüttelnd bewegten Rücklaufboden 21 wird das durch das Sieb 19 abgegebene Erntegut vorwärts in Richtung der Dreschorgane 3 gefördert und an die Reinigungseinrichtung 4 übergeben, wo sich der Erntegutstrom des Rücklaufbodens 21 mit dem durch den Dreschkorb 11 hindurch getretenen Erntegutstrom vereinigt, der von dem Vorbereitungsboden 12 an die Reinigungseinrichtung 4 abgegeben wird.

Die Reinigungseinrichtung 4 umfasst ein Obersieb 14, ein Untersieb 15 und ein Reinigungsgebläse 13, welches einen durch und über die Siebe 14, 15 streichenden Luftstrom erzeugt. Das Reinigungsgebläse 13 umfasst ein einteiliges Gehäuse 30 sowie zumindest ein auf wenigstens einer Antriebswelle angeordnetes Lüfterrad (nicht dargestellt). Das in den vom Vorbereitungsboden 12 beziehungsweise vom Rücklaufboden 21 kommenden Erntegutströmen enthaltene Korn passiert nacheinander das Obersieb 14 sowie das Untersiebe 15 und erreicht über einen darunter liegenden Boden 18 eine Schneckenfördereinrichtung 22 und einen Kornelevator 23, der es in einen im Rücken der Fahrerkabine 6 angeordneten Korntank 5 fördert.

Anteile des Erntegutstroms, die leichter als das Korn sind, werden beim Herabfallen vom Vorbereitungsboden 12 auf das Obersieb 14, vom Obersieb 14 auf das Untersieb 15 oder vom Untersieb 15 auf den Boden 18 von dem Luftstrom des Reinigungsgebläses 13 erfasst und mitgerissen, erreichen den Verteiler 7 und werden über diesen ausgeschieden. Schwere, gröbere Anteile des Erntegutstromes, wie unausgedroschene Ährenspitzen, gelangen mittels einer Überkehr am rückwärtigen Ende der Siebe 14, 15 in einen unterhalb der Siebe 14, 15 quer verlaufenden Graben. Eine in dem Graben rotierende Schnecke 20 räumt das Material seitwärts zu einem Überkehrelevator 25, der es zurück zu den Dreschorganen 3 befördert.

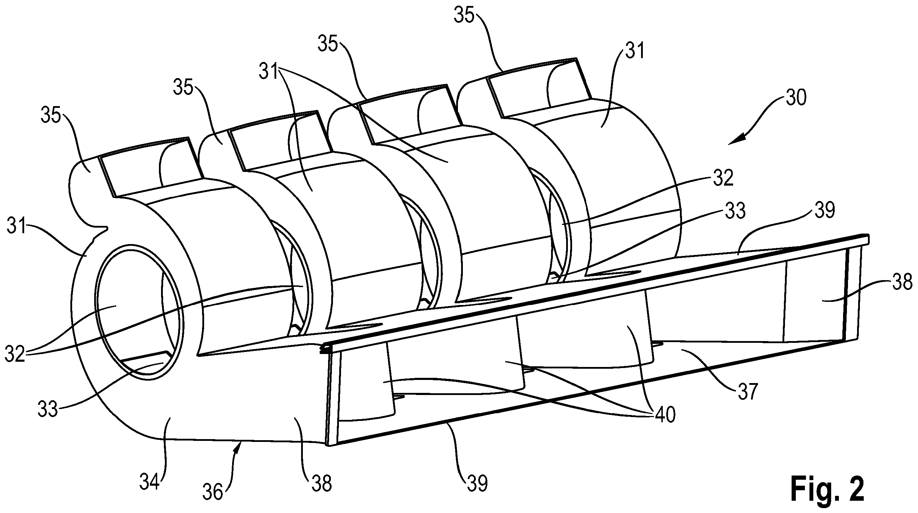

Fig. 2 zeigt eine perspektivische Darstellung eines Gehäuses 30 des Reinigungsgebläses 13. Das einteilig ausgeführte Gehäuse 30 umfasst eine der Anzahl der Lüfterräder entsprechende Anzahl von Gehäuseabschnitten 31 sowie einen Kanalabschnitt 36. In dem dargestellten Ausführungsbeispiel sind vier Gehäuseabschnitte 31 mit jeweils einem darin angeordneten Lüfterrad vorgesehen. Der jeweilige Gehäuseabschnitt 31 weist einen im Wesentlichen kreisförmigen Querschnitt auf und ist beidseitig mit sich abschnittsweise in radialer Richtung erstreckenden, einander gegenüberliegenden Eintrittsöffnungen 32 versehen, durch die sich nicht dargestellte Antriebselemente ein- und hindurchführbar sind, erstrecken. Die Zuführung respektive das Ansaugen von Luft erfolgt unter anderem durch die Eintrittsöffnungen 32 der außenliegenden Gehäuseabschnitte 31. Das Ansaugen von Luft erfolgt auch durch die Eintrittsöffnungen 32 zwischen benachbarten Gehäuseabschnitten 31. Eine Ausnehmung 33 ist untenseitig des jeweiligen ein Lüfterrad umgebenden Gehäuseabschnittes 31 vorgesehen, die zur Einführung des Lüfterrades in den Gehäuseabschnitt 31 dient. Die Ausnehmung 33 erstreckt sich abschnittsweise in Umfangsichtung des Gehäuseabschnittes 31. Vorzugsweise werden die Lüfterräder in gefalteter Form durch die jeweilige Ausnehmung 33 in den jeweiligen Gehäuseabschnitt 31 eingeführt und anschließend aufgefaltet. Die Montage der vorzugsweise einen alle Lüfterräder antreibenden Antriebswelle erfolgt im Anschluss an die Montage der Lüfterräder. Alternative Antriebsformen, wie der Einzelantrieb eines jeden Lüfterrades, sind ebenfalls denkbar. Die jeweilige Ausnehmung 33 ist durch ein entsprechendes, mit der Ausnehmung 33 korrespondierendes flächiges Verschlusselement verschließbar.

Weiterhin weisen die Gehäuseabschnitte 31 jeweils zumindest ein sich in tangentialer Richtung des jeweiligen Gehäuseabschnitts 31 respektive des darin angeordneten Lüfterrades erstreckendes erstes Austrittssegment 34 auf. Das erste Austrittssegment 34 des jeweiligen Gehäuseabschnittes 31 weist einen im Wesentlichen quaderförmigen Querschnitt auf. Des Weiteren weist der jeweilige Gehäuseabschnitt 31 eines jeden Lüfterrades ein zweites Austrittssegment 35 auf, welches in Umfangsrichtung des Gehäuseabschnittes 31 zu dem ersten Austrittssegment 34 versetzt angeordnet ist. Das zweite Austrittssegment 35 ist in Umfangsrichtung des Gehäuses 30 gesehen derart positioniert, dass es unterhalb des Vorbereitungsbodens 12 benachbart zu diesem in radialer Richtung aufragt. Das erste Austrittssegment 34 eines jeweiligen Gehäuseabschnittes 31 mündet in einen gemeinsamen Kanalabschnitt 36. Der Kanalabschnitt 36 erstreckt sich im Wesentlichen über die gesamte Breite des Gehäuses 30. Das zweite Austrittssegment 35 weist einen im Wesentlichen S-förmigen Verlauf auf. Dieser S-förmige Verlauf dient der Umlenkung des Luftstromes durch das zweite Austrittssegment 35 in Richtung der Unterseite des Vorbereitungsbodens 12 sowie einer sich zwischen dem Vorbereitungsboden 12 und dem Obersieb 14 ausbildenden Fallstufe.

Der Kanalabschnitt 36 weist eine im Wesentlichen quaderförmige Austrittsöffnung 37 auf, aus der der von dem Reinigungsgebläse 13 bereitgestellte Luftstrom austritt und dem Obersieb 14 und Untersieb 15 zugeführt wird. Der Kanalabschnitt 36 ist aus im Wesentlichen senkrecht verlaufenden, äußeren Seitenwänden 38 sowie im Wesentlichen waagerecht verlaufenden Wänden 39 gebildet. Die äußeren Seitenwände 38 schließen sich unmittelbar an die Austrittssegmente 34 des jeweils äußeren Gehäuseabschnitts 31 an. Im Inneren des Kanalabschnittes 36 sind im Wesentlichen U-förmige Wandabschnitte 40 angeordnet. Die langen Schenkel der Wandabschnitte 40 erstrecken sich im Wesentlichen parallel zu den Seitenwänden 38 und verbinden die Austrittssegmente 34 zueinander benachbarter Gehäuseabschnitte 31 miteinander. Der jeweilige kurze Schenkel der Wandabschnitte 40 weist einen bogenförmigen, in Richtung der Austrittsöffnung 37 gewölbten Verlauf auf. Hieraus resultiert eine strömungstechnisch günstige Form, durch die Verwirbelungen beim Zusammenführen der einzelnen Luftströme im Kanalabschnitt 36 zumindest reduziert werden. Darüber hinaus ist diese Formgebung von Vorteil, weil scharfe Kanten in dem einteiligen Gehäuse 30 vermieden werden, welche bei der Verwendung eines Rotationsformverfahrens zur Herstellung des einteiligen, aus dem wenigstens einem Gehäuseabschnitt 31 und dem Kanalabschnitt 36 gebildeten Gehäuses 30 des Reinigungsgebläses 13 für den Mähdrescher 1 von Nachteil wären.

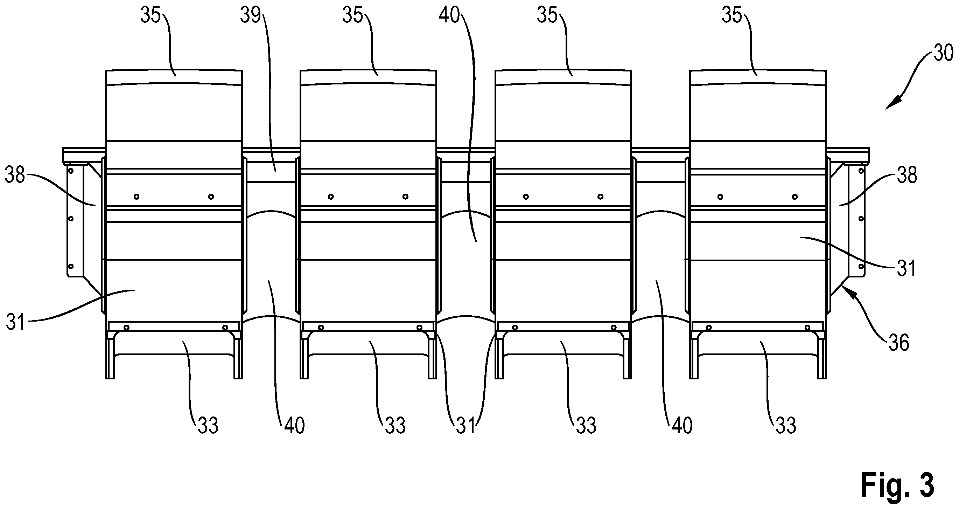

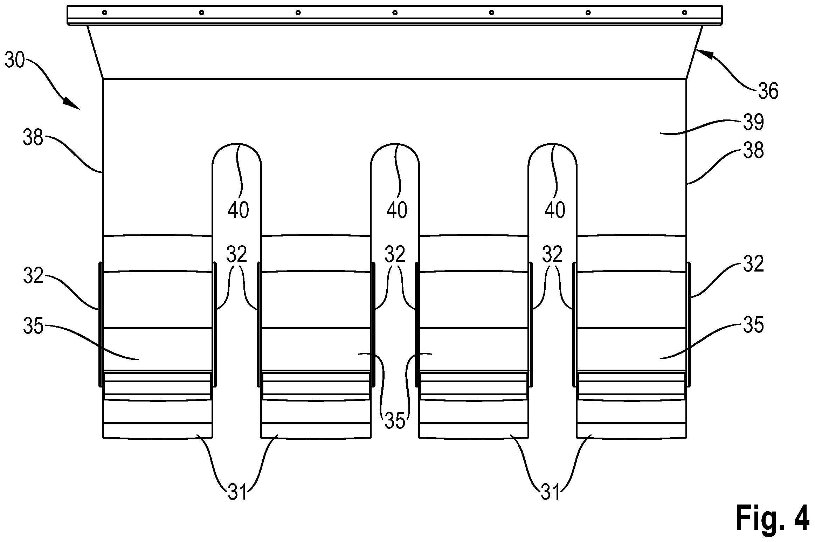

Die Fig. 3 und 4 zeigen das einteilige Gehäuse 30 in einer Frontalansicht gemäß Fig. 2, das heißt in Fahrtrichtung des Mähdreschers 1 gesehen, sowie in einer Ansicht von oben gemäß Fig. 2. In den Darstellungen wird der Bereich zwischen zwei benachbarten Gehäuseabschnitten 31 besonders veranschaulicht. Die U-förmigen, senkrecht zu den Wänden 39 zwischen diesen angeordneten Wandabschnitte 40 kanalisieren den jeweiligen aus einem Gehäuseabschnitte 31 austretenden Luftstrom, bevor diese in dem Kanalabschnitt 36 zusammengeführt werden. Die bogenförmigen kurzen Schenkel der Wandabschnitte 40 reduzieren Verwirbelungen beim Eintritt in den sich im Wesentlichen über die gesamte Breite des Gebläses 30 erstreckenden offenen Kanalabschnitts 36.

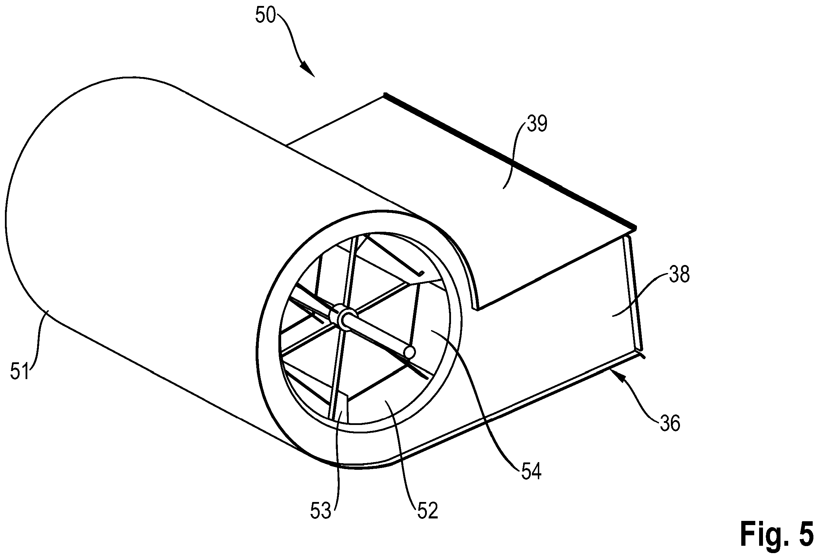

Die Darstellung in Fig. 5 zeigt eine zweite Ausführungsform eines Gehäuses 50 des Reinigungsgebläses 13, welches als so genanntes Tonnengebläse ausgeführt ist. Das einteilige Gehäuse 50 unterscheidet sich von dem vorangehend beschriebenen Ausführungsbeispiel dadurch, dass lediglich ein Gehäuseabschnitt 51 vorgesehen ist, der ein sich im Wesentlichen über die Breite der Siebe 14, 15 erstreckendes Lüfterrad 53 ummantelt. Das einteilige Gehäuse 50 weist endseitig sich in radialer Richtung des Gehäuseabschnittes 51 erstreckende Eintrittsöffnungen 52 auf, von denen in der perspektivischen Darstellung in Fig. 5 nur eine sichtbar ist. Der Anzahl des Lüfterrades 53 entsprechend ist nur ein Austrittssegment 54 vorgesehen, welches in den Kanalabschnitt 36 mündet. Ein derartiges Gehäuse 50 ist mittels des Rotationsformverfahrens leichter herstellbar, da die Geometrie deutlich einfacher ist.

### Bezugszeichenliste

| | | | |
|---|---|---|---|
| 1 | Mähdrescher | 30 | Gehäuse |
| 2 | Schneidwerk | 31 | Gehäuseabschnitt |
| 3 | Dreschorgane | 32 | Eintrittsöffnung |
| 4 | Reinigungseinrichtung | 33 | Ausnehmung |
| 5 | Korntank | 34 | Erstes Austrittssegment |
| 6 | Fahrerkabine | 35 | Zweites Austrittssegment |
| 7 | Verteilvorrichtung | 36 | Kanalabschnitt |
| 8 | Erntegut | 37 | Austrittsöffnung |
| 9 | Schrägförderorgan | 38 | Seitenwand |
| 10 | Dreschtrommel | 39 | Wand |
| 11 | Dreschkorb | 40 | Wandabschnitt |
| 12 | Vorbereitungsboden | | |
| 13 | Reinigungsgebläse | 50 | Gehäuse |
| 14 | Obersieb | 51 | Gehäuseabschnitt |
| 15 | Untersieb | 52 | Eintrittsöffnung |
| 16 | Wendetrommel | 53 | Lüfterrad |
| 17 | Axialrotor | 54 | Austrittssegment |
| 18 | Boden | | |
| 19 | Sieb | | |
| 20 | Schnecke | | |
| 21 | Rücklaufboden | | |
| 22 | Schneckenfördereinrichtung | | |
| 23 | Kornelevator | | |
| 24 | Rückwärtiges Ende von 17 | | |
| 25 | Überkehrelevator | | |
| 26 | Häcksler | | |

## Patentansprüche

1. Reinigungsgebläse (13) für einen Mähdrescher (1), umfassend:
- zumindest ein auf wenigstens einer Antriebswelle angeordnetes Lüfterrad,
- wenigstens einen das zumindest eine Lüfterrad ummantelnden Gehäuseabschnitt (31, 51), welcher zumindest eine Eintrittsöffnung (32, 52) zum Ansaugen von Luft und zumindest ein sich in tangentialer Richtung des jeweiligen Lüfterrades erstreckendes erstes Austrittssegment (34, 54) aufweist,
- sowie einen sich an das erste Austrittssegment (34, 54) anschließenden Kanalabschnitt (36), wobei der Kanalabschnitt (36) aus im Wesentlichen senkrecht verlaufenden Seitenwänden (38) sowie im Wesentlichen waagerecht verlaufenden Wänden (39) gebildet ist, und wobei im Inneren des Kanalabschnitts (36) U-förmige Wandabschnitte (40) angeordnet sind, deren lange Schenkel sich im Wesentlichen parallel zu den Seitenwänden (38) erstrecken und die ersten Austrittssegmente (34, 54) zueinander benachbarter Gehäuseabschnitte (31,51) miteinander verbinden, und wobei ein jeweiliger kurzer Schenkel der Wandabschnitte (40) einen bogenförmigen, in Richtung einer Austrittsöffnung (37) des Kanalabschnitts (36) gewölbten Verlauf aufweist, **dadurch gekennzeichnet, dass** der wenigstens eine Gehäuseabschnitt (31, 51) und der Kanalabschnitt (36) als ein einteiliges, aus einem Kunststoffmaterial bestehenden Gehäuse (30, 50) ausgeführt sind, wobei zumindest zwei Lüfterräder vorgesehen sind, die jeweils von einem Gehäuseabschnitt (31, 51) des einteiligen Gehäuses (30, 50) ummantelt sind.

2. Reinigungsgebläse (13) nach Anspruch 1, **dadurch gekennzeichnet, dass** das einteilige Gehäuse (30, 50) derart ausgeformt ist, dass es im Rotationsformverfahren herstellbar ist.

3. Reinigungsgebläse (13) nach Anspruch 1 oder 2, **dadurch gekennzeichnet, dass** der jeweilige Gehäuseabschnitt (31, 51) einen im Wesentlichen kreiszylindrischen Querschnitt aufweist und mit einer Ausnehmung (33) zur Einführung des jeweiligen Lüfterrades versehen ist.

4. Reinigungsgebläse (13) nach einem der Ansprüche 1 bis 3, **dadurch gekennzeichnet, dass** das erste Austrittssegment (34, 54) des Gehäuseabschnittes (31, 51) einen im Wesentlichen quaderförmigen Querschnitt aufweist.

5. Reinigungsgebläse (13) nach einem der Ansprüche 1 bis 4, **dadurch gekennzeichnet, dass** der jeweilige Gehäuseabschnitt (31, 51) eines jeden Lüfterrades ein zweites Austrittssegment (35) aufweist, das in Umfangsrichtung des Gehäuseabschnittes (31, 51) zu dem ersten Austrittssegment (34) versetzt angeordnet ist.

6. Reinigungsgebläse (13) nach einem der Ansprüche 1 bis 5, **dadurch gekennzeichnet, dass** das jeweilige erste Austrittssegment (34) des Gehäuseabschnittes (31, 51) in einem gemeinsamen, sich in tangentialer Richtung des Gehäuseabschnittes (31, 51) erstreckenden Luftaustrittsabschnitt des Kanalabschnitts (36) mündet.

7. Reinigungsgebläse (13) nach einem der Ansprüche 1 bis 6, **dadurch gekennzeichnet, dass** das Reinigungsgebläse (13) mit Radialläufern oder Trommelläufern ausgeführt ist.

8. Verwendung eines Rotationsformverfahrens zur Herstellung eines einteiligen, aus wenigstens einem Gehäuseabschnitt (31, 51) und einem Kanalabschnitt (36) gebildeten Gehäuses (30, 50) eines Reinigungsgebläses (13) nach einem der Ansprüche 1 bis 7 für einen Mähdrescher (1).

## Claims

1. A cleaning blower (13) for a combine harvester (1), comprising:
- at least one fan wheel arranged on at least one drive shaft,
- at least one housing portion (31, 51) which encases the at least one fan wheel and which has at least one inlet opening (32, 52) for sucking in air and at least one first outlet segment (34, 54) extending in the tangential direction of the respective fan wheel,
- and a passage portion (36) adjoining the first outlet segment (34, 54), wherein the passage portion (36) is formed from substantially perpendicularly extending side walls (38) and substantially horizontally extending walls (39), and wherein arranged in the interior of the passage portion (36) are U-shaped wall portions (40) whose long limbs extend substantially parallel to the side walls (38) and connect the first outlet segment (34, 54) of mutually adjacent housing portions (31, 51) together and wherein a respective short limb of the wall portions (40) is of an arcuate configuration curved in the direction of an outlet opening(37) of the passage portion (36), **characterised in that** the at least one housing portion (31 , 51) and the passage portion (36) are in the form of a one-piece housing (30, 50) comprising a plastic material, wherein there are provided at least two fan wheels, each of which is encased by a housing portion (31, 51) of the one-piece housing (30, 50).

2. A cleaning blower (13) according to claim 1 **characterised in that** the one-piece housing (30, 50) is shaped in such a way that it can be produced using the rotary moulding process.

3. A cleaning blower (13) according to claim 1 or claim 2 **characterised in that** the respective housing portion (31, 51) is of a substantially circular-cylindrical cross-section and is provided with an orifice (33) for introducing the respective fan wheel.

4. A cleaning blower (13) according to one of claims 1 to 3 **characterised in that** the first outlet segment (34, 54) of the housing portion (31, 51) is of a substantially cuboidal cross-section.

5. A cleaning blower (13) according to one of claims 1 to 4 **characterised in that** the respective housing portion (31, 51) of each fan wheel has a second outlet segment (35) which is arranged displaced in the peripheral direction of the housing portion (31, 51) relative to with the first outlet segment (34).

6. A cleaning blower according to one of claims 1 to 5 **characterised in that** the respective first outlet segment (34) of the housing portion (31, 51) opens in a common air outlet portion of the passage portion (36), that extends in the tangential direction of the housing portion (31, 51) .

7. A cleaning blower (13) according to one of claims 1 to 6 **characterised in that** the cleaning blower (13) is designed with radial impellers or drum impellers.

8. Use of a rotary moulding method for producing a one-piece housing (30, 50) formed from at least one housing portion (31, 51) and a passage portion (36) of a cleaning blower (13) according to one of claims 1 to 7 for a combine harvester (1).

## Revendications

1. Soufflante de nettoyage (13) destinée à une moissonneuse-batteuse (1), comprenant :
- au moins une roue de ventilateur disposée sur au moins un arbre d'entraînement,
- au moins une partie de carter (31, 51) qui enveloppe la roue de ventilateur, au nombre d'au moins une, et qui présente au moins une ouverture d'entrée (32, 52), destinée à aspirer de l'air, et au moins un premier segment de sortie (34, 54) s'étendant dans le sens tangentiel de la roue de ventilateur respective,
- ainsi qu'une partie de conduit (36) se raccordant au premier segment de sortie (34, 54), la partie de conduit (36) étant constituée de parois latérales (38) sensiblement verticales et de parois (39) sensiblement horizontales, et sachant qu'à l'intérieur de la partie de conduit (36) il est prévu des parties de parois (40) en forme de U dont les ailes longues s'étendent de façon sensiblement parallèle aux parois latérales (38) et relient les premiers segments de sortie (34, 54) de parties de carter (31, 51) mutuellement adjacentes, et sachant qu'une aile courte respective des parties de paroi (40) présente une forme d'arc incurvé en direction d'une ouverture de sortie (37) de la partie de conduit (36), **caractérisée en ce que** la partie de carter (31, 51), au nombre d'au moins une, et la partie de conduit (36) sont réalisées sous la forme d'un carter (30, 50) monobloc constitué d'une matière plastique, dans lequel il est prévu au moins deux roues de ventilateur qui sont enveloppées chacune par une partie de carter (31, 51) du carter (30, 50) monobloc.

2. Soufflante de nettoyage (13) selon la revendication 1, **caractérisée en ce que** le carter (30, 50) monobloc est formé de manière telle qu'il puisse être fabriqué dans le cadre d'un procédé de moulage rotatif.

3. Soufflante de nettoyage (13) selon la revendication 1 ou 2, **caractérisée en ce que** la partie de carter (31, 51) respective présente une section sensiblement de forme cylindrique circulaire et est dotée d'un évidement (33) destiné à introduire la roue de ventilateur respective.

4. Soufflante de nettoyage (13) selon l'une des revendications 1 à 3, **caractérisée en ce que** le premier segment de sortie (34, 54) de la partie de carter (31, 51) présente une section sensiblement en forme de parallélépipède.

5. Soufflante de nettoyage (13) selon l'une des revendications 1 à 4, **caractérisée en ce que** la partie de carter (31, 51) respective de chaque roue de ventilateur présente un deuxième segment de sortie (35) qui est disposé de manière décalée par rapport au premier segment de sortie (34, 54), dans la direction périphérique de chaque partie de carter (31, 51).

6. Soufflante de nettoyage (13) selon l'une des revendications 1 à 5, **caractérisée en ce que** le premier segment de sortie (34, 54) respectif de la partie de carter (31, 51) débouche dans un tronçon de sortie d'air commun de la partie de conduit (36), qui s'étend dans la direction tangentielle de la partie de carter (31, 51).

7. Soufflante de nettoyage (13) selon l'une des revendications 1 à 6, **caractérisée en ce que** la soufflante de nettoyage (13) est réalisée avec des rotors radiaux ou des rotors à tambour.

8. Utilisation d'un procédé de moulage rotatif pour la fabrication d'un carter (30, 50) monobloc, constitué d'au moins une partie de carter (31, 51) et d'une partie de conduit (36), d'une soufflante de nettoyage (13) selon l'une des revendications 1 à 7, destinée à une moissonneuse-batteuse (1).
